# EUROPEAN PATENT SPECIFICATION

(11) **EP 3 075 525 B1**
(45) Date of publication and mention of the grant of the patent: **19.02.2020**
(21) Application number: 15161833.7
(22) Date of filing: 31.03.2015
(51) Int. Cl.: B29C 70/48, B29C 70/54, B29L 31/30

(54) **METHOD AND APPARATUS FOR CASTING A FIBRE REINFORCED COMPOSITE PRODUCT**
VERFAHREN UND VORRICHTUNG ZUM GIESSEN EINES FASERVERSTÄRKTEM VERBUNDWERKSTOFFS
PROCÉDÉ ET APPAREIL PERMETTANT DE COULER UN PRODUIT COMPOSITE RENFORCÉ PAR DES FIBRES

(43) Date of publication of application: 05.10.2016
(73) Proprietor: Aplicator System AB, 435 33 Mölnlycke (SE)
(72) Inventor: Jönsson, Peder, 431 36 Mölndal (SE)
(74) Representative: Valea AB

(56) References cited:
- WO-A1-2006/005110
- JP-A- H01 242 219
- CHAN A W ET AL: "Sequential multiple port injection for resin transfer molding of polymer composites", SAMPE QUARTERLY, SOCIETY FOR THE ADVANCEMENT OF MATERIAL AND PROCESS ENGINEERING, US, 1 October 1992 (1992-10-01), pages 45-49, XP008177537, ISSN: 0036-0821
- KANG M K ET AL: "Analysis of resin transfer moulding process with controlled multiple gates resin injection", COMPOSITES PART A: APPLIED SCIENCE AND MANUFACTURING, ELSEVIER SCIENCE PUBLISHERS B.V., AMSTERDAM, NL, vol. 31, no. 5, 1 May 2000 (2000-05-01), pages 407-422, XP004191868, ISSN: 1359-835X, DOI: 10.1016/S1359-835X(99)00086-X

## Description

### TECHNICAL FIELD

The present invention relates to a method and an apparatus for casting a fibre reinforced composite product. The method utilizes at least two sets of mold inlets and subsequently injects the composite fluid to form a propagating front of composite fluid towards a mold outlet.

### BACKGROUND

The production of fibre reinforced composite products involving a fibre reinforcing substrate being placed in an enclosing mold assembly comprising a single or multiple inlets for the injection of a composite fluid to impregnate the substrate, is well known. For example, the published European patent application no. EP 2 818 294 A1 disclose injecting resin from a plurality of injection ports. The injection ports are disposed in a first central position of the substrate to be impregnated, and in a second position outside the periphery of the substrate but inside the mold. The injection ports at the periphery are arranged to inject the resin substantially through the periphery of the substrate to be impregnated.

Chan and authors ("sequential multiple port injection for resin transfer molding of polymer composites.", SAMPE QUARTELY, 19921001 Society for the Advancement of Material and Process Engineering, US-ISSN 0036-0821, Pages 45-49) describes according to the abstract numerical simulations of multiple port resin injection scheme proposed for enhancing mold filling times.

Kang and authors ("analysis of resin transfer moulding process with controlled multiple gates resin injection", ComposiTes Part A: Applied Science and Manufacturing, 20000501 ELSEVIER, AMSTERDAM, NL, Vol:31, Nr 5, Pages 407-422) describes according to the abstract experiments and numerical simulations of multiple gate injection schemes fro resin transfer moulding.

JP H01 242219 A describes according to the abstract injecting resin from a plurality of gates provided in the cavity of a mold.

For larger fibre reinforced composite products e.g. with a complex 3D form such as boat hulls, vehicle doors, tanks or containers it is difficult to achieve a fast and efficient flow of the composite fluid and at the same time avoid an uneven impregnation of the fibre reinforcing substrate. One sign of uneven impregnation of the fibre reinforcing substrate can be visually identified through so called dry spots.

The use of high pressure injection has been known to be advantageous to solve above mentioned issues. However, this requires an expensive and rigid mold assembly. Further, the fibers of the reinforcing substrate can easily be displaced by the flow of the composite fluid causing the flow to be stopped or obstructed resulting in an incomplete or less efficient impregnation. This problem has been addressed by modifying fibre reinforcing substrates with flow layers or similar to improve the flow of the composite fluid. Fibre reinforcing substrates having flow layers can be considered to be a laminate. Such a laminate generally has two opposing layers of fibre reinforcing substrates with an intermediate flow layer. The flow layer of the fibre reinforcing substrate is specifically adapted to have a low flow resistance, thus permitting the fluid composite to readily flow and disperse throughout the fibre reinforcing substrate. A fibre reinforcing substrate of the above mentioned kind is both costly and labor and time intensive to manufacture, hence there is a need for addressing the above mentioned drawbacks.

### SUMMARY

It is an objective of the present invention to provide an improved method of injecting composite fluid when casting of fibre reinforced composite products with regard to minimize overflow of composite fluid, eliminate the need for flow layers or any similar modification of the fibre reinforcing substrate, achieve a fast and efficient flow with even impregnation of high quality and a simpler, easy-to-handle mold assembly.

According to the invention, there is presented a method for casting a fibre reinforced composite product having a reinforcing fibre substrate in accordance with claim 1. Further embodiments are set out in the dependent claims. The method comprises the steps of; providing a mold, the mold having at least a first and a second set of mold inlets for injecting composite fluid into the mold and at least one mold outlet. The mold outlet is preferably connectable to a negative pressure source, such as a vacuum pump. Each set of mold inlets have at least a first and a second mold inlet. The method further comprises the steps of, placing a reinforcing fibre substrate into the mold, substantially simultaneously start injecting the composite fluid from at least the first mold inlet of the first set of mold inlets and the first mold inlet of the second set of mold inlets and; subsequently thereafter substantially simultaneously start injecting composite fluid from the second mold inlet of the first set of mold inlets and the second mold inlet of the second set of mold inlets.

The second mold inlet of the first set of mold inlets, and the second mold inlet of the second set of mold inlets may be positioned closer to the at least one mold outlet than the first mold inlet of the first set of mold inlets and the first mold inlet of the second set of mold inlets. The sequential injection from at least two sets of mold inlets has shown advantageous to achieve an efficient impregnation and to avoid so called dry-spots. The method further assists when injecting with a relatively low injection pressure, which prevents or at least reduces displacement of fibres in the fibre reinforcing substrate, which otherwise can cause a complete stop in the flow and impregnation or at least affect the flow and impregnation in a negative manner. It is further effective when using fibre reinforcing substrate having no dedicated low resistance flow layer.

The first and/or second set of mold inlets may be formed by three or more mold inlets, preferably by four or more mold inlets. In particular, for larger fibre reinforced composite structures and/or structures with complex 3D forms, it is preferred that a set of mold inlets may be formed by four or more mold inlets.

A mold as disclosed herein, may have at least a first and second distribution channel for distribution of the composite fluid. A first mold inlet of the first set of mold inlets may be arranged at the first distribution channel. The first mold inlet of the second set of mold inlets may also be arranged at the first distribution channel. According to an aspect, each mold inlet of one specific set of mold inlets is associated with a unique distribution channel. In this sense there can be several sets of mold inlets associated with each distribution channel.

At least the first mold inlet of the first set of mold inlets, and the first mold inlet of the second set of mold inlets may be separated by a distance of from 0,1-5,0 m, or 0,1-4,0 m, or 0,1-3,0 m, or 0,1-1,5 m.

The distribution channels facilitate the flow of composite fluid from the inlets along the direction of the distribution channels length. The distance between the first and the second distribution channel may be from 0,05 - 1,0 m, or 0,05 - 0,8 m, or 0,05 - 0,6 m, or 0,05 - 0,5 m.

The second mold inlets of the first and second sets of mold inlets may be offset with respect to the first mold inlets of the first and second sets of mold inlets. By offsetting at least the second mold inlets of the first and second set of mold inlets with respect to the first mold inlets of the first and second set of mold inlets, the number of dry spots can effectively be reduced, or the size of dry spots can be reduced. Individual mold inlets of a first set of mold inlets and individual mold inlets of a second set of mold inlets can be arranged to form a zigzag pattern in the direction of the propagating front of fluid composite, i.e. in a direction towards a mold outlet.

A majority, or preferably each, of the mold inlets of the first and the second set of mold inlets comprise a valve, the valve being arranged directly adjacent to the mold inlet. The valve is thus in the direct proximity to the mold and no, or substantially no, composite fluid is wasted due to being abundant in a fluid channel between the valve and the mold inlet.

At least a first and second mold inlet of the first set of mold inlets may be connected to a first feeding line, preferably through the respective valves. At least a first and a second mold inlet of the second set of mold inlets may be connected to a second feeding line and/or the first feeding line. The first and the second feeding lines may be connected in parallel to one or more sources of composite fluid.

It has been shown advantageous with the valves arranged directly adjacent to the mold inlets. With the valves closed so that no composite fluid can be injected into the mold, the feeding lines may be flushed clean and ready for usage again. Optionally, if the valve of the first mold inlet of the first set of mold inlets is closed, composite fluid may still be directed to the valve of the second mold inlet of the first set of mold inlets. This permits the injection of the composite fluid through the second mold inlets of the first and the second set of mold inlets even though the first mold inlets of the first and second set of mold inlets are closed. It is believed that this minimizes the waste of composite fluid and favour the sequential injection of composite fluid. Further optionally, the valve of the first mold inlet may permit injection of composite fluid through the inlet as well as directing composite fluid through the feeding line to the consecutive mold inlet.

The reinforcing fibre substrate may be a preformed fibre strand mat formed by cut fibres, continuous fibres, non-woven fibre fabric, a single reinforcing layer fibre substrate, a fibre substrate laminate comprising a sandwiched porous layer which provides reduced composite fluid flow resistance, or combinations thereof. It has been found that the method is specifically advantageous when using a single reinforcing layer fibre substrate, as such single reinforcing layer fibre substrate generally has a high flow resistance.

An electronic control unit, for example a computer, may be used to control the opening and/or closing of each one of the valves comprised in each of the first and second set of mold inlets.

The composite fluid can be for example a thermosetting plastic and/or a resin.

The present invention also relates to a mold assembly for casting a fibre reinforced composite product having a reinforcing fibre substrate. The mold assembly comprises a mold comprising at least a first and a second set of mold inlets for injecting composite fluid into the mold and at least one mold outlet preferably connectable to a negative pressure source, such as a vacuum pump. Each of the mold inlets of the first and the second set of mold inlets is arranged with a valve. The mold assembly further comprises an electronic control unit arranged to control the opening and the closing sequence of the valves arranged at the first and the second sets of mold inlets respectively. The electronic control unit is adapted to substantially simultaneously open the valves at the first mold inlet of the first set of mold inlets and the first mold inlet of the second set of mold inlets to start injecting said composite fluid and subsequently thereafter open the valves of the second mold inlet of the first set of mold inlets and the second mold inlet of the second set of mold inlets to start injecting composite fluid. Preferably, the second mold inlets of the first and the second set of mold inlets are positioned closer to the at least one mold outlet than the first mold inlets of the first and the second set of mold inlets.

The mold assembly provide an efficient mold assembly which can be used to impregnate fibre reinforcing substrates with composite fluid even though the fibre reinforcing substrate has a relatively high internal flow resistance, e.g. due to a high fibre density.

### BRIEF DESCRIPTION OF THE DRAWINGS

The present invention will be further explained hereinafter by means of non-limiting examples and with reference to the appended drawings wherein;
figure 1 shows a schematic view of a boat hull mold assembly with the injection system; figure 2a shows a cross sectional schematic view of an injection system according to an embodiment of the present invention;
figure 2b shows a view from above of assembly in figure 2a and;
figure 3 shows a schematic view of an injection system according to an embodiment of the present invention in which the second mold inlets of the first and second sets of mold inlets are offset with respect to the first mold inlets of the first and second sets of mold inlets.

### DETAILED DESCRIPTION OF PREFERRED EMBODIMENTS

Non-limiting embodiments of the method and apparatus for the production of fiber reinforced composite products will hereafter be described with reference to the accompanying figures.

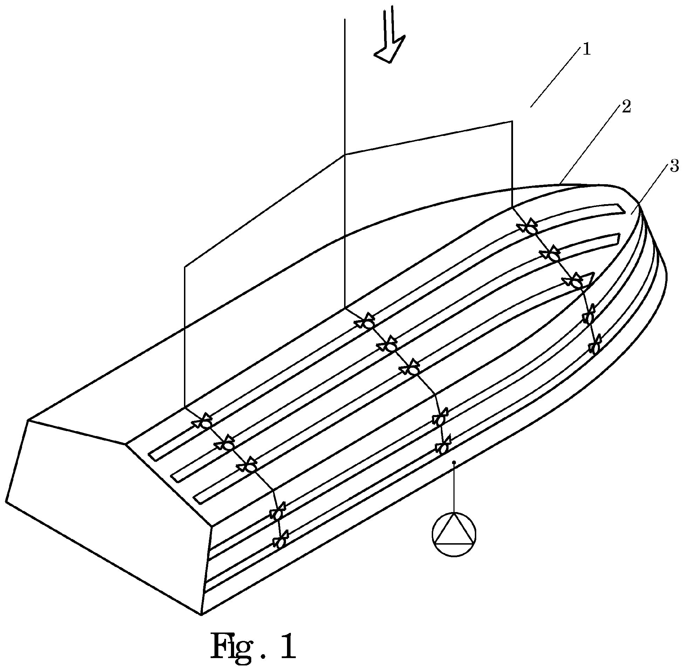

Figure 1 shows a mold assembly 1 for the production of fiber reinforced composite products such as boat hulls, or vehicle parts e.g. a vehicle door or a vehicle chassi. In Figure 1 a boat hull 2 serves as an example to visualize the fiber reinforced composite product. Before injecting, a fibre reinforcing substrate is placed between two mold parts, forming a mold 3. In Figure 1, the injection system is only visualized on one side of the mold 3 to serve as an example. Pressure and vacuum is used to inject and to suck the composite fluid into the mold and to impregnate the fibre reinforcing substrate. When vacuum is used to assist the composite fluid to flow through the fibre reinforcing substrate, care should be taken not to inject the composite fluid with too much pressure as effectively could push the mold parts apart.

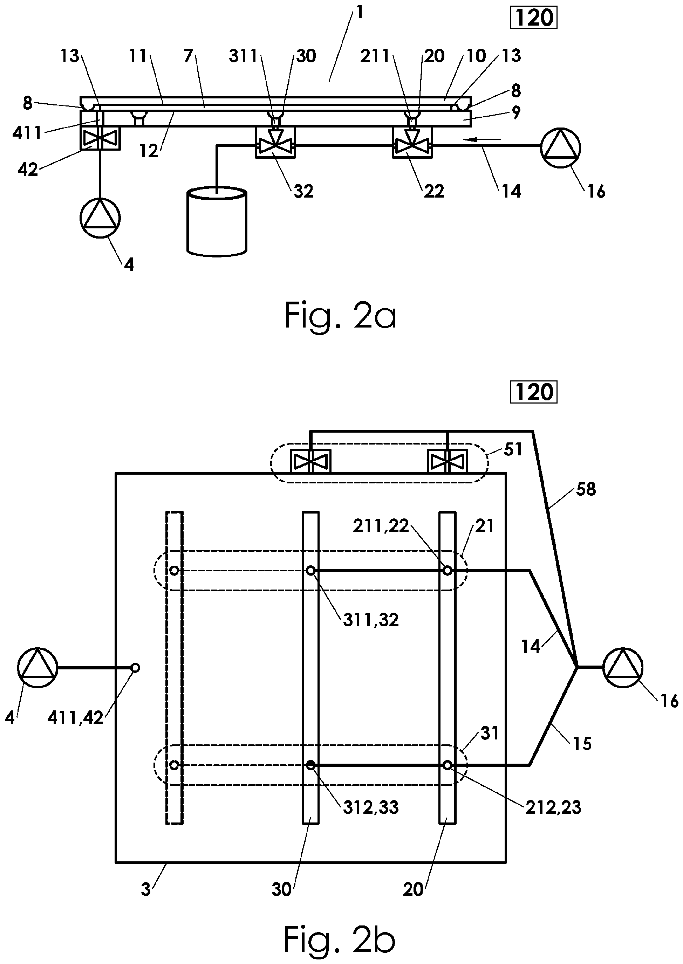

Figure 2a shows a schematic cross sectional view of a mold assembly 1. The mold assembly 1 comprises a mold 3 comprising a first and a second opposing mold member, hereafter referred to as a lower mold member 9 and an upper mold member 10. Sealing means 8 is positioned between the upper and the lower mold members 9, 10. A reinforcing fibre substrate 7 is arranged on the lower mold member 9, and the upper mold member 10 is positioned so as to extend at least over the sealing means 8 whereby a negative pressure can be formed inside of the mold 3. A negative pressure source 4, such as a vacuum pump, is connected to the mold 3 and creates a negative pressure inside of the mold 3. The negative pressure assists in retaining the upper mold member 10 firmly in place against the lower mold member 9, while sucking composite fluid from a composite fluid source 16 during the injection of the composite fluid into the mold 3.

The lower mold member 9 comprises a first distribution channel 20 and a second distribution channel 30 for simplifying the distribution of the composite fluid. A first set of mold inlets 21 comprising a first and a second mold inlet 211, 311, arranged at the first and second distribution channel 20, 30 respectively are connected to a first feeding line 14. The feeding line 14, e.g. a hose, extends through respective valves 22, 32. The feeding line 14 extends between different distribution channels and thus supplies composite fluid to the different distribution channels 20, 30.

The cross section of a distribution channel 20, 30 may have different shapes, such as a squared, a semicircular, or a triangular shape. In figure 2a the cross section of the distribution channels 20, 30 have a shape of a semicircle. Desired shape may vary depending on the product produced since the distribution channels will leave an imprint on the surface of the casted product. The distribution channels may be placed in both and in either one of the lower or upper mold members 9, 10, and thus it may be chosen which surface of the casted product that the distribution channels will make an imprint on. The cross sectional area of the distribution channels may be from 3,5 - 250,0 mm², preferably from 3,5 - 90 mm². The distance between the first and the second distribution channel may be for example from 0,05 - 1,0 m, or 0,05 - 0,8 m, or 0,05 - 0,6 m, or 0,05 - 0,5 m.

Figure 2b shows the mold assembly 1 of figure 2a with a view from above. A second set of mold inlets 31 comprises a first and a second mold inlet 212, 312 arranged at the first and the second distribution channel 20, 30 respectively, and are connected to a second feeding line 15. The feeding line 15, e.g. a hose, extends through respective valves 23, 33. With reference to figure 2b, each mold inlet 211, 212, 311, 312 comprise a valve 22, 23, 32, 33 arranged directly adjacent to the mold inlets 211, 212, 311, 312. The valves 22, 23, 32, 33 are thus positioned in the direct proximity of the mold 3. The first and/or second set of mold inlets 21, 31 are formed respectively by at least two mold inlets, preferably three or more mold inlets, even more preferably four or more mold inlets. In figure 2a and 2b two sets of mold inlets 21, 31 each with two mold inlets 211,311, 212, 312 are shown but a third mold inlet of each set of mold inlets arranged at a third distribution channel is indicated by dashed lines. The method when operating three or more mold inlets, or four or more mold inlets per set of mold inlets, is the same i.e. it is based on the consecutive opening and/or closing of specific mold inlets in different sets of mold inlets so as to form a propagating front of composite fluid, moving forward substantially in a step wise manner. As is noticed in figure 2b, the first and the second set of mold inlets are indicated by the dashed lines. The first mold inlet of the first set of mold inlets, and the first mold inlet of the second set of mold inlets may be separated by a distance of from 0,1 -5,0 m, or 0,1-4,0 m, or 0,1-3,0 m, or 0,1-1,5 m.

The first and the second feeding lines 14, 15 are connected in parallel. A common composite fluid source 16 can be used. This enables the simultaneous feeding of composite fluid in the parallel feeding lines 14, 15 and thus simultaneous injection from respective mold inlets.

The mold 3 also comprises at least a first mold outlet 411. The at least one mold outlet may comprise a valve 42 that is arranged directly adjacent to the mold outlet, and connected to negative pressure source, such as a vacuum pump 4. The opening and closing of each valve, both inlets and outlets, may be individually controllable, using an electronic control unit 120, for example a computer.

Turning back to figure 2a, the fibre reinforcing substrate has a three-dimensional shape, and may be defined by an upper and lower surface 11, 12 with a periphery 13. Generally, the fibers of the fibre reinforcing substrate lay with their ends pointing along the layer in a direction towards the periphery.

As visualized in Fig 2a and 2b, the distribution channels 20, 30, with respective sets of mold inlets 21, 31, of the mold 3 are configured to facilitate the injection of the composite fluid through the lower surface 12 of the fibre reinforcing substrate 7. Optionally or additionally the composite fluid can be injected through the upper surface 11 of the fibre reinforcing substrate 7.

As shown in figure 2b an additional set of mold inlets 51, preferably each inlet comprising a valve, and connected to a feeding line 58, is arranged at the periphery of the fibre reinforcing substrate as to permit injection through the periphery of the fibre reinforcing substrate. A peripherally arranged set of mold inlets is however purely optional for the purpose of the present invention.

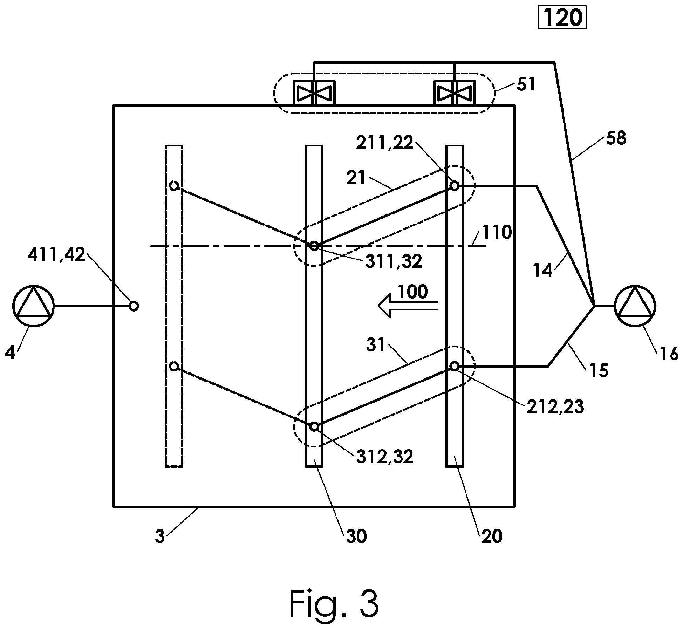

Figure 3 shows a mold assembly 1 with the second mold inlets 311, 312 of the first and second sets of mold inlets 21, 31 offset with respect to the first mold inlets 211, 212 of the first and second sets of mold inlets 21, 31. In Figure 2b, the mold inlets of the first and second sets of mold inlets respectively are positioned along a straight line. In comparison, the mold inlets may also be position as the configuration shows in figure 3, in which respective feeding line deviates from a straight line when viewed as shown in figure 3. As can be noticed, it is the consecutive mold inlets with respect to the feeding line that are offset. In cases where there is a higher number of consecutive mold inlets feed by the same feeding line, thus belonging to the same set of mold inlets, a zigzag pattern is formed, as indicated with the dashed lines. The second mold inlet 311 of the first set 21 is positioned substantially at the intersection of a straight reference line 110, perpendicular to the first and second distribution channels length, between the first mold inlets 211, 212 of the first and second set 21, 31 and the second distribution channel 30.

During the sequential injection of composite fluid, a main resin flow direction may be defined as indicated by the arrow 100 in figure 3. When injecting through a set of inlets, the composite fluid spreads radially, mainly towards an outlet, as well as along the distribution channel. By displacing the position of the mold inlets 211, 212, 311, 312, positioning them in a rhomb like pattern, when viewed as shown in figure 3, makes the propagation of the composite fluid go even faster due to a more even spread.

The injection through the sets of mold inlets may be carried out in several ways. For example, the valve of a first mold inlet of the first set of mold inlets, may either open the inlet, directing all the composite fluid in the feeding line into the mold 3, or close the mold inlet, and thereby directing all the composite fluid to the consecutive mold inlet on the same feeding line. Optionally or additionally, the valve of a first mold inlet of the first set of mold inlets, may permit composite fluid to be injected into the mold 3 and at the same time permitting composite fluid to be directed to the consecutive mold inlet on the same feeding line.

For example, the second mold inlets of the first and second set of mold inlets may start injecting additional composite fluid substantially simultaneously, directly after, or prior to, to that the first mold inlets of the first and second set of mold inlets stops injecting composite fluid.

The reinforcing fibre substrate may comprise a fibre substrate laminate comprising a sandwiched porous layer which provides reduced resin flow resistance, a single layer reinforcing fibre substrate, a non-woven fibre fabric, and/or a preformed fibre strand mat formed by cut and/or continuous fibres.

The composite fluid can be for example a thermosetting plastic and/or a resin.

As mentioned herein, the first mold inlet, does not necessarily need to be the first mold inlet in a feeding line, but can very well be a mold inlet of a plurality of mold inlets arranged in a consecutive row of mold inlets.

## Claims

1. A method for casting a fibre reinforced composite product having a reinforcing fibre substrate (7), said method comprising the steps of;
- providing a mold (3), said mold (3) having at least a first and a second set of mold inlets (21, 31) for injecting composite fluid into said mold (3) and at least one mold outlet (411) connectable to a negative pressure source, such as a vacuum pump (4),
each set of mold inlets (21, 31) having at least a first and a second mold inlet (211, 311, 212, 312),
said second mold inlet (311) of said first set of mold inlets (21) and said second mold inlet (312) of said second set of mold inlets (31) are positioned closer to said at least one mold outlet (411) than said first mold inlet (211) of said first set of mold inlets (21) and said first mold inlet (212) of said second set of mold inlets (31),
- placing a reinforcing fibre substrate (7) into said mold (3),
- substantially simultaneously start injecting said composite fluid from at least said first mold inlet (211) of said first set of mold inlets (21) and;
said first mold inlet (212) of said second set of mold inlets (31) and,
- subsequently thereafter substantially simultaneously start injecting composite fluid from said second mold inlet (311) of said first set of mold inlets (21) and said second mold inlet (312) of said second set of mold inlets (31), **characterized in that**
said mold (3) has at least a first and a second distribution channel (20, 30) for distribution of said composite fluid, whereby a first mold inlet (211) of said first set of mold inlets (21) is arranged at said first distribution channel (20), and a first mold inlet (212) of said second set of mold inlets (31) is also arranged at said first distribution channel (20).

2. The method according to claim 1, whereby said first and/or second set of mold inlets (21, 31) are formed by three or more mold inlets, preferably four or more mold inlets.

3. The method according to the preceding claim, whereby the distance between said first and said second distribution channel (20, 30) is from 0,05 - 1,0 m, or 0,05 - 0,8 m, or 0,05 - 0,6 m, or 0,05 - 0,5 m.

4. The method according to any one of the preceding claims, whereby at least said first mold inlet (211) of said first set of mold inlets (21), and said first mold inlet (212) of said second set of mold inlets (31) are separated by a distance of from 0,1-5,0 m, or 0,1-4,0 m, or 0,1-3,0 m, or 0,1-1,5 m.

5. The method according to any one of the preceding claims, whereby said second mold inlets (311, 312) of said first and said second sets of mold inlets (21, 31) are offset with respect to said first mold inlets (211, 212) of said first and said second sets of mold inlets (21, 31).

6. The method according to any one of the preceding claims, whereby a majority, or preferably each, of said mold inlets (211, 311, 212, 312) of said first and said second set of mold inlets (21, 31) comprise a valve (22, 32, 23, 33), said valve (22, 32, 23, 33) being arranged directly adjacent to said mold inlet (211, 311, 212, 312).

7. The method according to any one of the preceding claims, whereby said at least first and second mold inlet (211, 311) of said first set of mold inlets (21) are connected to a first feeding line (14) through respective said valves (22, 32) and said at least first and second mold inlet (212, 312) of said second set of mold inlets (31) are connected to a second feeding line (15) through respective said valves (23, 33), and said first and said second feeding lines (14, 15) are connected in parallel to one or more sources of composite fluid (16).

8. The method according to any one of the preceding claims, whereby said reinforcing fibre substrate (7) is a preformed fibre strand mat formed by cut and/or continous fibres.

9. The method according to any one of preceding claims, whereby said reinforcing fibre substrate (7) is a non-woven fibre fabric.

10. The method according to any one of the preceding claims, whereby said reinforcing fibre substrate (7) is a single reinforcing layer fibre substrate.

11. The method according to any one of claim 1-9, whereby said reinforcing fibre substrate (7) is a fibre substrate laminate comprising a sandwiched porous layer which provides reduced composite fluid flow resistance.

12. The method according to any one of the preceding claims, whereby a electronic control unit (120) controls the opening and/or closing of each one of said valves (22, 32, 23, 33) comprised in each of said first and second set of mold inlets (21, 31).

13. A mold assembly (1) for casting a fibre reinforced composite product having a reinforcing fibre substrate (7), said mold assembly (1) comprising a mold (3) comprising at least a first and a second set of mold inlets (21, 31) for injecting composite fluid into said mold (3) and at least one mold outlet (411) connectable to a negative pressure source, such as a vacuum pump (4), each set of mold inlets (21, 31) comprising at least a first and a second mold inlet (211, 311, 212, 312), said second mold inlet (311) of said first set of mold inlets (21) and said second mold inlet (312) of said second set of mold inlets (31) being positioned closer to said at least one mold outlet (411) than said first mold inlet (211) of said first set of mold inlets (21) and said first mold inlet (212) of said second mold inlets (31). each of said mold inlets (211, 311, 212, 312) of said first and said second set of mold inlets (21, 31) having a valve (22, 32, 23, 33), said mold assembly (1) further comprising an electronic control unit (120) arranged to control the opening and the closing sequence of a said valves (22, 32, 23, 33) arranged at said first and said second sets of mold inlets (21, 31) respectively, wherein said electronic control unit (120) is adapted to substantially simultaneously open said valves (22, 23) at said first mold inlet (211) of said first set of mold inlets (21) and said first mold inlet (212) of said second set of mold inlets (31) to start injecting said composite fluid and; subsequently thereafter open said valves (32, 33) of said second mold inlet (311) of said first set of mold inlets (21) and said second mold inlet (312) of said second set of mold inlets (31) to start injecting composite fluid, **characterized in that** said mold (3) has at least a first and a second distribution channel (20, 30) for distribution of said composite fluid, whereby a first mold inlet (211) of said first set of mold inlets (21) is arranged at said first distribution channel (20), and a first mold inlet (212) of said second set of mold inlets (31) is also arranged at said first distribution channel (20).

## Patentansprüche

1. Verfahren zum Gießen eines faserverstärkten Verbundstoffprodukts mit einem Verstärkungsfasersubstrat (7), das Verfahren umfassend die Schritte:
- Bereitstellen einer Form (3), wobei die Form (3) zumindest einen ersten und einen zweiten Satz von Formeinlässen (21, 31) zum Einspritzen von Verbundstofffluid in die Form (3) und zumindest einen Formauslass (411), der mit einer Unterdruckquelle wie einer Vakuumpumpe (4) verbunden werden kann, aufweist,
wobei jeder Satz von Formeinlässen (21, 31) zumindest einen ersten und einen zweiten Formeinlass (211, 311, 212, 312) aufweist,
der zweite Formeinlass (311) des ersten Satzes von Formeinlässen (21) und der zweite Formeinlass (312) des zweiten Satzes von Formeinlässen (31) näher bei dem zumindest einen Formauslass (411) positioniert sind als der erste Formeinlass (211) des ersten Satzes von Formeinlässen (21) und der erste Formeinlass (212) des zweiten Satzes von Formeinlässen (31),
- Platzieren eines Verstärkungsfasersubstrats (7) in der Form (3),
- im Wesentlichen gleichzeitiges Starten eines Einspritzens des Verbundstofffluids aus zumindest dem ersten Formeinlass (211) des ersten Satzes von Formeinlässen (21) und; des ersten Formeinlasses (212) des zweiten Satzes von Formeinlässen (31) und
- anschließend danach im Wesentlichen gleichzeitiges Starten eines Einspritzens des Verbundstofffluids aus dem zweiten Formeinlass (311) des ersten Satzes von Formeinlässen (21) und dem zweiten Formeinlass (312) des zweiten Satzes von Formeinlässen (31), **dadurch gekennzeichnet, dass**
die Form (3) zumindest einen ersten und einen zweiten Verteilerkanal (20, 30) zum Verteilen des Verbundstofffluids aufweist, wobei ein erster Formeinlass (211) des ersten Satzes von Formeinlässen (21) an dem ersten Verteilerkanal (20) angeordnet ist und ein erster Formeinlass (212) des zweiten Satzes von Formeinlässen (31) ebenso an dem ersten Verteilerkanal (20) angeordnet ist.

2. Verfahren nach Anspruch 1, wobei der erste und/oder zweite Satz von Formeinlässen (21, 31) durch drei oder mehr Formeinlässe gebildet sind, bevorzugt vier oder mehr Formeinlässe.

3. Verfahren nach einem der vorstehenden Ansprüche, wobei der Abstand zwischen dem ersten und zweiten Verteilerkanal (20, 30) 0,05 - 1,0 m oder 0,05 - 0,8 m oder 0,05 - 0,6 m oder 0,05 - 0,5 m ist.

4. Verfahren nach einem der vorstehenden Ansprüche, wobei zumindest der erste Formeinlass (211) des ersten Satzes von Formeinlässen (21) und der erste Formeinlass (212) des zweiten Satzes von Formeinlässen (31) durch einen Abstand von 0,1 - 5,0 m oder 0,1 - 4,0 m oder 0,1 - 3,0 m oder 0,1 - 1,5 m getrennt sind.

5. Verfahren nach einem der vorstehenden Ansprüche, wobei die zweiten Formeinlässe (311, 312) des ersten und des zweiten Satzes von Formeinlässen (21, 31) in Bezug zu den ersten Formeinlässen (211, 212) des ersten und des zweiten Satzes von Formeinlässen (21, 31) versetzt sind.

6. Verfahren nach einem der vorstehenden Ansprüche, wobei ein Großteil oder bevorzugt jeder der Formeinlässe (211, 311, 212, 312) des ersten und des zweiten Satzes von Formeinlässen (21, 31) ein Ventil (22, 32, 23, 33) umfasst, wobei das Ventil (22, 32, 23, 33) direkt neben dem Formeinlass (211, 311, 212, 312) angeordnet ist.

7. Verfahren nach einem der vorstehenden Ansprüche, wobei der zumindest erste und zweite Formeinlass (211, 311) des ersten Satzes von Formeinlässen (21) durch die entsprechenden Ventile (22, 32) mit einer ersten Zufuhrleitung (14) verbunden sind und der zumindest erste und zweite Formeinlass (212, 312) des zweiten Satzes von Formeinlässen (31) durch die entsprechenden Ventile (23, 233) mit einer zweiten Zufuhrleitung (15) verbunden sind und die erste und die zweite Zufuhrleitung (14, 15) parallel mit einer oder mehreren Quellen von Verbundstofffluid (16) verbunden sind.

8. Verfahren nach einem der vorstehenden Ansprüche, wobei das Verstärkungsfasersubstrat (7) eine vorgeformte Faserstrangmatte ist, die durch Schnitt- und/oder Endlosfasern gebildet ist.

9. Verfahren nach einem der vorstehenden Ansprüche, wobei das Verstärkungsfasersubstrat (7) ein Vliesfaserstoff ist.

10. Verfahren nach einem der vorstehenden Ansprüche, wobei das Verstärkungsfasersubstrat (7) ein einzelnes Verstärkungsschichtfasersubstrat ist.

11. Verfahren nach einem der Ansprüche 1-9, wobei das Verstärkungsfasersubstrat (7) ein Fasersubstratlaminat ist, das eine eingelegte poröse Schicht umfasst, die verringerten Verbundstofffluidströmungswiderstand bereitstellt.

12. Verfahren nach einem der vorstehenden Ansprüche, wobei eine elektronische Steuereinheit (120) das Öffnen und/oder Schließen jedes der Ventile (22, 32, 23, 33) steuert, die in jedem des ersten und zweiten Satzes von Formeinlässen (21, 31) umfasst sind.

13. Formanordnung (1) zum Gießen eines faserverstärkten Verbundstoffprodukts mit einem Verstärkungsfasersubstrat (7), wobei die Formenanordnung (1) eine Form (3) umfasst, die zumindest einen ersten und einen zweiten Satz von Formeinlässen (21, 31) zum Einspritzen von Verbundstofffluid in die Form (3) und zumindest einen Formauslass (411), der mit einer Unterdruckquelle wie einer Vakuumpumpe (4) verbunden werden kann, umfasst, wobei jeder Satz von Formeinlässen (21, 31) zumindest einen ersten und einen zweiten Formeinlass (211, 311, 212, 312) umfasst, der zweite Formeinlass (311) des ersten Satzes von Formeinlässen (21) und der zweite Formeinlass (312) des zweiten Satzes von Formeinlässen (31) näher bei dem zumindest einen Formauslass (411) positioniert sind als der erste Formeinlass (211) des ersten Satzes von Formeinlässen (21) und der erste Formeinlass (212) der zweiten Formeinlässe (31), jeder der Formeinlässe (211, 311, 212, 312) des ersten und zweiten Satzes von Formeinlässen (21, 31) ein Ventil (22, 32, 23, 33) aufweist, wobei die Formanordnung (1) weiter eine elektronische Steuereinheit (120) umfasst, die zum Steuern der Öffnungs- und der Schließsequenz der Ventile (22, 32, 23, 33) angeordnet ist, die an dem ersten bzw. zweiten Satz von Formeinlässen (21, 31) angeordnet sind, wobei die elektronische Steuereinheit (120) angepasst ist, die Ventile (22, 23) an dem ersten Formeinlass (211) des ersten Satzes von Formeinlässen (21) und dem ersten Formeinlass (212) des zweiten Satzes von Formeinlässen (31) im Wesentlichen gleichzeitig zu öffnen, um Einspritzen des Verbundstofffluids zu starten, und; danach anschließend die Ventile (32, 33) des zweiten Formeinlasses (311) des ersten Satzes von Formeinlässen (21) und des zweiten Formeinlasses (312) des zweiten Satzes von Formeinlässen (31) zu öffnen, um Einspritzen von Verbundstofffluid zu starten, **dadurch gekennzeichnet, dass** die Form (3) zumindest einen ersten und einen zweiten Verteilerkanal (20, 30) zum Verteilen des Verbundstofffluids aufweist, wobei ein erster Formeinlass (211) des ersten Satzes von Formeinlässen (21) an dem ersten Verteilerkanal (20) angeordnet ist und ein erster Formeinlass (212) des zweiten Satzes von Formeinlässen (31) ebenso an dem ersten Verteilerkanal (20) angeordnet ist.

## Revendications

1. Procédé pour couler un produit composite renforcé par des fibres ayant un substrat de fibres de renforcement (7), ledit procédé comprenant les étapes consistant à ;
- fournir un moule (3), ledit moule (3) comportant au moins un premier et un second ensemble d'entrées de moule (21, 31) pour injecter un fluide composite dans ledit moule (3) et au moins une sortie de moule (411) pouvant être connectée à une source de pression négative, telle qu'une pompe à vide (4),
chaque ensemble d'entrées de moule (21, 31) ayant au moins une première et une seconde entrée de moule (211, 311, 212, 312),
ladite seconde entrée de moule (311) dudit premier ensemble d'entrées de moule (21) et ladite seconde entrée de moule (312) dudit second ensemble d'entrées de moule (31) sont positionnées plus près de ladite au moins une sortie de moule (411) que ladite première entrée de moule (211) dudit premier ensemble d'entrées de moule (21) et ladite première entrée de moule (212) dudit second ensemble d'entrées de moule (31),
- placer un substrat de fibres de renforcement (7) dans ledit moule (3),
- commencer sensiblement simultanément à injecter ledit fluide composite à partir d'au moins ladite première entrée de moule (211) dudit premier ensemble d'entrées de moule (21) et ;
ladite première entrée de moule (212) dudit second ensemble d'entrées de moule (31) et,
- commencer ensuite sensiblement simultanément à injecter un fluide composite à partir de ladite seconde entrée de moule (311) dudit premier ensemble d'entrées de moule (21) et de ladite seconde entrée de moule (312) dudit second ensemble d'entrées de moule (31), **caractérisé en ce que**
ledit moule (3) comporte au moins un premier et un second canal de distribution (20, 30) pour une distribution dudit fluide composite, de telle sorte qu'une première entrée de moule (211) dudit premier ensemble d'entrées de moule (21) est agencée au niveau dudit premier canal de distribution (20), et une première entrée de moule (212) dudit second ensemble d'entrées de moule (31) est également agencée au niveau dudit premier canal de distribution (20).

2. Procédé selon la revendication 1, dans lequel ledit premier et/ou second ensemble d'entrées de moule (21, 31) sont formés par trois entrées de moule ou plus, de préférence quatre entrées de moule ou plus.

3. Procédé selon la revendication précédente, dans lequel la distance entre ledit premier et ledit second canal de distribution (20, 30) est comprise entre 0,05 et 1,0 m, ou entre 0,05 et 0,8 m, ou entre 0,05 et 0,6 m, ou entre 0,05 et 0,5 m.

4. Procédé selon l'une quelconque des revendications précédentes, dans lequel au moins ladite première entrée de moule (211) dudit premier ensemble d'entrées de moule (21) et ladite première entrée de moule (212) dudit second ensemble d'entrées de moule (31) sont séparées par une distance de 0,1 à 5,0 m ou de 0,1 à 4,0 m ou de 0,1 à 3,0 m ou de 0,1 à 1,5 m.

5. Procédé selon l'une quelconque des revendications précédentes, dans lequel lesdites secondes entrées de moule (311, 312) desdits premier et second ensembles d'entrées de moule (21, 31) sont décalées par rapport auxdites premières entrées de moule (211, 212) desdits premier et second ensembles d'entrées de moule (21, 31).

6. Procédé selon l'une quelconque des revendications précédentes, dans lequel une majorité, ou de préférence chacune, desdites entrées de moule (211, 311, 212, 312) dudit premier et dudit second ensemble d'entrées de moule (21, 31) comprennent une vanne (22, 32, 23, 33), ladite vanne (22, 32, 23, 33) étant agencée directement adjacente à ladite entrée de moule (211, 311, 212, 312).

7. Procédé selon l'une quelconque des revendications précédentes, dans lequel lesdites au moins première et seconde entrées de moule (211, 311) dudit premier ensemble d'entrées de moule (21) sont connectées à une première ligne d'alimentation (14) par l'intermédiaire desdites vannes respectives (22, 32) et lesdites au moins première et seconde entrées de moule (212, 312) dudit second ensemble d'entrées de moule (31) sont connectées à une seconde ligne d'alimentation (15) par l'intermédiaire desdites vannes respectives (23, 33) et des première et seconde conduites d'alimentation (14, 15) sont connectées en parallèle à une ou plusieurs sources de fluide composite (16).

8. Procédé selon l'une quelconque des revendications précédentes, dans lequel ledit substrat de fibres de renforcement (7) est un mat de brins de fibres préformées formé de fibres coupées et/ou continues.

9. Procédé selon l'une quelconque des revendications précédentes, dans lequel ledit substrat de fibres de renforcement (7) est un tissu fibreux non tissé.

10. Procédé selon l'une quelconque des revendications précédentes, dans lequel ledit substrat de fibres de renforcement (7) est un substrat de fibres à couche de renforcement unique.

11. Procédé selon l'une quelconque des revendications 1 à 9, dans lequel ledit substrat de fibres de renforcement (7) est un stratifié de substrat de fibres comprenant une couche poreuse enserrée qui fournit une résistance réduite à un écoulement de fluide composite.

12. Procédé selon l'une quelconque des revendications précédentes, dans lequel une unité de commande électronique (120) commande l'ouverture et/ou la fermeture de chacune desdites vannes (22, 32, 23, 33) comprises dans chacun desdits premier et second ensembles d'entrées de moule (21, 31).

13. Ensemble de moule (1) pour couler un produit composite renforcé de fibres comportant un substrat de fibres de renforcement (7), ledit ensemble de moule (1) comprenant un moule (3) comprenant au moins un premier et un second ensemble d'entrées de moule (21, 31) pour injecter un fluide composite dans ledit moule (3) et au moins une sortie de moule (411) pouvant être connectée à une source de pression négative, telle qu'une pompe à vide (4), chaque ensemble d'entrées de moule (21, 31) comprenant au moins une première et une seconde entrée de moule (211, 311, 212, 312), ladite seconde entrée de moule (311) dudit premier ensemble d'entrées de moule (21) et ladite seconde entrée de moule (312) dudit second ensemble d'entrées de moule (31) étant positionnées plus près de ladite au moins une sortie de moule (411) que ladite première entrée de moule (211) dudit premier ensemble d'entrées de moule (21) et ladite première entrée de moule (212) desdites secondes entrées de moule (31), chacune desdites entrées de moule (211, 311, 212, 312) dudit premier et dudit second ensemble d'entrées de moule (21, 31) comportant une vanne (22, 32, 23, 33), ledit ensemble de moule (1) comprenant en outre une unité de commande électronique (120) agencée pour commander l'ouverture et la séquence de fermeture d'une desdites vannes (22, 32, 23, 33) agencées au niveau desdits premier et second ensembles d'entrées de moule (21, 31), respectivement, dans lequel ladite unité de commande électronique (120) est adaptée pour ouvrir sensiblement simultanément lesdites vannes (22, 23) au niveau de ladite première entrée de moule (211) dudit premier ensemble d'entrées de moule (21) et de ladite première entrée de moule (212) dudit second ensemble de moule des entrées (31) pour commencer à injecter ledit fluide composite et ; sensiblement après l'ouverture desdites vannes (32, 33) de ladite seconde entrée de moule (311) dudit premier ensemble d'entrées de moule (21) et de ladite seconde entrée de moule (312) dudit second ensemble d'entrées de moule (31) pour commencer à injecter du fluide composite, **caractérisé en ce que** ledit moule (3) a au moins un premier et un second canal de distribution (20, 30) pour une distribution dudit fluide composite, de sorte qu'une première entrée de moule (211) dudit premier ensemble d'entrées de moule (21) est agencée au niveau dudit premier canal de distribution (20), et une première entrée de moule (212) dudit second ensemble d'entrées de moule (31) est également agencée au niveau dudit premier canal de distribution (20).
